# DEMANDE DE BREVET EUROPEEN

(11) **EP 0 551 786 A1**
(43) Date de publication de la demande: **21.07.1993**
(21) Numéro de dépôt: 92403595.9
(22) Date de dépôt: 31.12.1992
(51) Int. Cl.: H02G 11/02, H02G 1/08, H02G 1/06

(54) **Procédé d'installation d'un câble avec traversée d'obstacles à partir d'un câble de grande longueur enroulé sur un touret**

(30) Priorité: 17.01.1992 FR 9200473
(71) Demandeur: FOPTICA, F-60730 Sainte Geneviève (Oise) (FR)
(72) Inventeur: Laupetre, Jean-Jacques, Laversines (Oise) (FR); Dervillez, Jean-Claude, Bury (Oise) (FR); Chapelet, Franck, Beauvais (Oise) (FR)
(74) Mandataire: Cabinet HERRBURGER

(57) **Abrégé**

a) Procédé d'installation d'un câble avec traversée d'obstacles à partir d'un câble de grande longueur enroulé sur un touret.

b) Procédé caractérisé en ce que :
- on dévide le câble (1) du premier touret (6) non rotatif par dévidage, en tournant autour du touret,
- on conduit le câble (2) à travers l'obstacle (2, 3)
- on reprend le câble (1) en sortie d'obstacle en rebobinant en tournant autour d'un second touret (22),
- on tourne simultanément, en synchronisme, pour le dévidage et le rebobinage pour dévider le câble du premier touret (6) et le rebobiner sur le deuxième touret (22), et
- on exerce, sur le second touret, un couple de rebobinage induisant une certaine tension dans le câble pendant le rebobinage.

## Description

La présente invention concerne un procédé et un dispositif d'installation d'un câble avec traversée d'obstacles à partir d'un câble de grande longueur enroulé sur un touret.

On connaît différents procédés pour l'installation de câbles de grande longueur.

Un premier procédé très utilisé, en particulier pour les câbles téléphoniques, consiste à enterrer des tubes jointifs, c'est-à-dire à mettre les tubes bout à bout dont les extrémités débouchent dans des regards à l'air libre. Puis on introduit le câble dans un tube et on le fait progresser en le tirant ou en le poussant par exemple avec de l'air comprimé. Cette méthode nécessite deux opérations successives et oblige de construire le câble pour qu'il résiste aux tractions résultant des forces de frottement apparaissant lors du tirage.

Un second procédé consiste à creuser une tranchée profonde et étroite et pendant la même opération à enterrer le câble qui n'est alors soumis à aucune traction. Ce procédé se heurte à une difficulté majeure lors de la traversée de route. En effet, il faut trancher la route ce qui impose l'arrêt de la circulation. Il est également possible de percer un trou sous la route et d'y introduire un tube protecteur puis de faire passer le câble dans le tube. Dans ce cas, il faut dévider entièrement le câble du touret qui le porte, le lover en huit sur le terrain et le faire passer dans le tube puis le reprendre sur un touret de l'autre côté de cet obstacle pour continuer la pose. Or, ces manipulations de câble sont dangereuses pour le câble et doivent être effectuées manuellement par les opérateurs.

La présente invention a pour but de remédier aux inconvénients des solutions connues et se propose de créer un procédé permettant une pose de câbles de grande longueur avec traversée d'obstacles tels que des routes, des chemins de fer, et... par un perçage dans l'obstacle sans avoir à ouvrir cet obstacle par une saignée.

L'invention se propose également de créer un dispositif permettant la mise en oeuvre de ce procédé.

De façon générale, l'invention concerne l'installation de tout élément filiforme ou assimilable à un câble et qui est conditionné sur des tourets ou des bobines tels que des câbles électriques ou optiques, des tubes pour fluides, des barres, etc...

A cet effet, l'invention concerne un procédé d'installation d'un câble avec traversée d'obstacles à partir d'un câble de grande longueur enroulé sur un premier touret placé en amont de l'obstacle, ce procédé étant caractérisé en ce que :
- on dévide le câble du premier touret non rotatif par dévidage, en tournant autour du touret,
- on conduit le câble à travers l'obstacle
- on reprend le câble en sortie d'obstacle en rebobinant en tournant autour d'un second touret,
- on tourne simultanément, en synchronisme, pour le dévidage et le rebobinage pour dévider le câble du premier touret et le rebobiner sur le deuxième touret, et
- on exerce, sur le second touret, un couple de rebobinage induisant une certaine tension dans le câble pendant le rebobinage.

La mise en oeuvre de ce procédé supprime toute intervention manuelle directe sur le câble outre la prise de l'extrémité du câble et son introduction dans le passage à travers l'obstacle. Ce procédé permet de supprimer l'opération extrêmement délicate et dangereuse de la dépose du câble du touret suivant une disposition libre, en huit, en amont de l'obstacle puis la reprise de ce câble en sortie d'obstacle sur un touret. Le procédé évite également toute tranchée dans l'obstacle.

Suivant une autre caractéristique, le procédé englobe également les étapes de pose avant la traversée d'un obstacle et à cet effet le procédé est caractérisé en ce que :
- on installe le câble à partir d'un point de raccordement pour déroulage du touret jusqu'à l'obstacle à traverser.
- on met en place un touret auxiliaire vide
- on bloque en rotation le touret auxiliaire
- on laisse le touret principal libre en rotation
- on place une boucle du câble prise en amont du touret principal sur le touret auxiliaire
- on tourne autour du touret principal pour dévider le câble du touret principal et le faire passer sur le touret auxiliaire qui reste fixe tout en appliquant une rotation compensatoire au touret principal.

Il est à remarquer que les expressions "touret principal/touret auxiliaire" doivent être prises au sens général ; elles ne sont utilisées que pour simplifier la description du procédé étant donné que le touret principal peut jouer le rôle de touret auxiliaire ou le touret auxiliaire celui de touret principal à la suite de plusieurs passages en série à travers des obstacles, le câble passant d'un touret à l'autre alternativement.

Selon l'invention, on enroule le câble sur le touret auxiliaire ou sur le touret principal en exécutant un mouvement de trancanage.

Selon une caractéristique intéressante, le procédé de l'invention s'applique également à des câbles enroulés sur des tourets cloisonnés. Le procédé est ainsi caractérisé en ce que :
- on enroule sur un touret cloisonné à deux compartiments, le câble avec une boucle passant par une fente ouverte dans la cloison du touret, le premier compartiment recevant une longueur de câble égale à la longueur pratique de câble à enfouir dans une tranchée en amont de l'obstacle à traverser jusqu'au point de branchement amont et dans le second compartiment on enroule une longueur égale à celle nécessaire en aval de l'obstacle, y compris la longueur de passage à travers l'obstacle,
- on dévide et on installe le câble entre le point de branchement et l'obstacle en utilisant la longueur de câble du premier compartiment,
- on dévide le câble du second compartiment et on le rebobine à la sortie de l'obstacle sur un second touret en le dévidant du côté amont de l'obstacle et en le rebobinant du côté aval, simultanément et en synchronisme.

Dans le cadre de l'application du procédé à un touret cloisonné, il est intéressant pour permettre la répétition de l'opération de passage d'un obstacle, que la reprise se fasse également sur un touret cloisonné et à cet effet le procédé selon l'invention est caractérisé en ce que le second touret est constitué d'un ensemble formé d'un touret intermédiaire et d'un touret cloisonné auxiliaire et :
- on rebobine d'abord sur le touret intermédiaire, le câble jusqu'à ce qu'il ne reste sur le deuxième compartiment du touret cloisonné, principal, en amont de l'obstacle, qu'une longueur égale à celle que doit recevoir le premier compartiment du touret cloisonné auxiliaire,
- puis on place la boucle de câble prise entre le touret intermédiaire et la sortie de l'obstacle dans la fente de la cloison du touret auxiliaire et on rebobine simultanément dans les deux compartiments du touret auxiliaire en chargeant le premier compartiment à partir du reste de câble du touret principal et le deuxième compartiment du touret auxiliaire à partir du câble enroulé sur le touret intermédiaire.

La présente invention concerne également un dispositif pour la mise en oeuvre du procédé tant dans son expression générale que dans ses applications particulières, soit un touret simple, soit un touret cloisonné.

Ainsi, le dispositif pour la mise en oeuvre du procédé dans son expression générale est caractérisé en ce qu'il comprend :
- un touret principal (premier touret),
- un moyen de support du touret principal de manière non rotative,
- un touret auxiliaire (deuxième touret),
- un moyen de montage en rotation du touret auxiliaire,
- un équipage de dévidage associé au touret principal,
- un équipage de rebobinage associé au touret auxiliaire,
- un moyen d'entraînement synchrone des deux équipages pour le dévidage et le rebobinage simultané des tourets respectifs,
- un moyen appliquant un couple d'enroulement au touret auxiliaire pour tendre le câble au rebobinage,
- un moyen de commande relié au moyen d'entraînement du premier équipage et au moyen d'entraînement du second équipage.

Suivant une autre caractéristique de l'invention, le moyen d'entraînement synchrone est un axe électrique.

Suivant une autre caractéristique de l'invention, l'équipage de rebobinage comporte un moyen de trancanage.

Suivant une autre caractéristique de l'invention, les équipages comportent un moyen de guidage pour recevoir le câble suivant l'axe de rotation de chaque équipage et guider le câble à la sortie et à l'entrée respective de l'équipage.

Suivant une autre caractéristique de l'invention, l'équipage comprend :
- un touret auxiliaire et un équipage de transfert communs aux tourets principal et auxiliaire, juxtaposés sur le même axe,
- un moyen de blocage en rotation du touret auxiliaire, le touret principal étant rotatif,
- l'équipage auxiliaire tournant autour des deux tourets pour transférer le câble du touret principal au touret auxiliaire.

Suivant une autre caractéristique de l'invention, le touret auxiliaire est porté par un axe solidaire d'une console mobile en translation de trancanage commandé et le touret principal est monté à rotation sur un axe aligné sur le touret auxiliaire, cet axe portant l'équipage de transfert et est relié à un moyen d'entraînement en rotation, un moyen coopérant avec le touret principal pour exercer un couple d'enroulement.

Suivant une autre caractéristique de l'invention, l'équipage de transfert pour le touret auxiliaire est monté sur un tube aligné sur l'axe de rotation de l'équipage et destiné à être traversé par le câble en sortie d'équipage, ce tube étant monté dans un palier à galets et est relié à un moyen d'entraînement en rotation, ce tube comportant une partie amovible pour permettre l'extraction du câble sans le sectionner.

Suivant une autre caractéristique de l'invention, l'équipage de rebobinage associé au touret principal en sortie d'obstacles est monté solidairement en rotation sur un manchon entraîné en rotation par un moyen d'entraînement et monté dans un palier à galets, ce manchon étant traversé par le câble en amont de l'équipage proprement dit et ce manchon comporte une partie périphérique amovible pour permettre l'extraction du câble en fin de rebobinage, le touret principal étant monté sur un axe monté libre en rotation dans un support coopérant avec des moyens de translation, ce support comportant un moyen d'entraînement en rotation relié au touret par l'intermédiaire d'un frein électromagnétique.

Suivant une autre caractéristique de l'invention, les tube et manchon comportent des parties amovibles.

Suivant une autre caractéristique de l'invention, l'équipage de transfert est porté par un arbre cannelé logé dans un manchon cannelé lui-même entraîné en rotation par un moyen d'entraînement, ce manchon traversant librement en rotation une console fixe et recevant extérieurement, de manière libre en rotation, le touret auxiliaire, l'arbre cannelé étant commandé en translation axiale pour effectuer un mouvement de trancanage, et l'équipage de transfert comporte un bras radial portant près de l'axe une poulie et à son extrémité une poulie ainsi qu'un bras transversal muni à ses extrémités d'une poulie, cet équipage assurant avec ces poulies le transfert du câble du touret principal au touret auxiliaire et par ces poulies le dévidage du câble à partir du touret auxiliaire.

Suivant une autre caractéristique de l'invention, l'équipage de réception se compose d'un bras radial portant une poulie près de l'axe et une poulie d'extrémité ainsi qu'un bras transversal portant une poulie, cet équipage étant fixé à un arbre cannelé relié à un bras commandé en translation parallèlement à l'axe de l'arbre pour commander l'équipage en mouvement de trancanage, ainsi qu'un cylindre cannelé recevant l'arbre cannelé, ce cylindre portant une poulie coopérant avec un moyen d'entraînement en rotation, et le touret principal est monté libre en rotation sur le cylindre cannelé en étant relié à un dispositif de couplage électromagnétique dont une partie est solidaire du touret principal et l'autre est reliée à un moyen d'entraînement en rotation pour induire dans le touret un couple d'enroulement.

Suivant une autre caractéristique de l'invention, l'ensemble de réception en sortie d'obstacles pour transférer le câble sur un touret cloisonné auxiliaire se compose d'un touret intermédiaire et d'un touret auxiliaire, cloisonné à deux compartiments placé entre le touret intermédiaire et la sortie du passage de l'obstacle, ainsi qu'un équipage de transfert entre le touret intermédiaire et le second compartiment du touret cloisonné auxiliaire ainsi qu'un équipage de réception placé à la sortie de l'obstacle en amont du touret cloisonné auxiliaire, l'équipage se composant d'un bras radial et d'un bras transversal, ce dernier portant deux poulies pour rebobiner le câble sur le touret intermédiaire soit pour transférer le câble du touret intermédiaire vers le second compartiment du touret cloisonné auxiliaire et l'équipage de rebobinage comporte un galet de réception en sortie de passage et un galet de renvoi pour soit coopérer en synchronisme et en phase avec l'équipage pour guider le câble d'abord sur le touret intermédiaire, soit pour rebobiner du câble directement du touret placé en amont de l'obstacle, dans le premier compartiment du touret cloisonné auxiliaire, indépendamment du transfert de câble à partir du touret intermédiaire vers le second compartiment du touret cloisonné principal.

La présente invention sera décrite ci-après à l'aide de quelques exemples du procédé selon l'invention expliqués à l'aide des dessins annexes. Ainsi :
- la figure 1 est une vue schématique générale d'un montage pour la mise en oeuvre du procédé de l'invention selon ses caractéristiques les plus générales.
- la figure 2 est une variante du montage de la figure 1.
- la figure 3 est une vue schématique d'un site nécessitant la mise en oeuvre du procédé selon l'invention.
- la figure 4 est une vue schématique de la première étape du procédé, le touret étant en attente.
- la figure 5 est une vue schématique de la seconde étape du procédé montrant la mise en place du touret auxiliaire.
- la figure 6 est une vue schématique de la troisième étape du procédé montrant le transfert du câble du touret principal sur le touret auxiliaire.
- la figure 7 montre une quatrième étape du procédé à la fin du transfert du câble sur le touret auxiliaire.
- la figure 8 est une vue schématique de la sixième étape du procédé montrant le transfert du câble à travers le passage, du touret auxiliaire au touret principal.
- la figure 9 est une autre vue schématique d'un montage correspondant à la 5ème étape du procédé.
- la figure 10 est une autre variante du montage pour la mise en oeuvre du procédé selon l'invention.
- la figure 11 est une vue en coupe transversale du tube 64 selon la figure 10.
- la figure 12 montre également en coupe axiale la poulie ou roue dentée assurant l'entraînement des tubes des équipages rotatifs de dévidage, de transfert et de rebobinage.
- la figure 13A montre une variante de réalisation du montage de la figure 9, en position de transfert du câble du touret principal vers le touret auxiliaire.
- la figure 13B montre l'ensemble de la figure 13A en position de dévidage.
- la figure 14 est une variante de l'ensemble de réception par rapport à l'ensemble de réception de la figure 10.
- la figure 15 est une vue schématique d'un chemin de guidage courbe de câble par exemple en sortie de passage d'obstacles.
- la figure 16 est une vue de dessus correspondant à la figure 15.
- la figure 17 est une vue en perspective d'un touret cloisonné à deux compartiments.
- la figure 18 est une vue perpendiculaire à l'axe du touret cloisonné de la figure 17.
- la figure 19A montre le touret cloisonné chargé de son câble à deux brins.

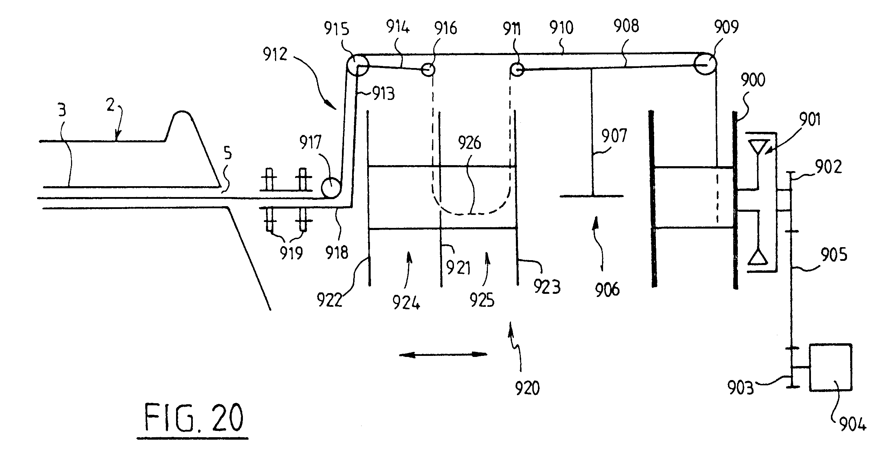

- la figure 19 montre le touret cloisonné après le dévidage du câble contenu dans le premier compartiment.
- la figure 20 est une vue schématique de l'ensemble de réception et de rebobinage placé en sortie d'obstacles pour le rebobinage du câble sur un touret cloisonné.

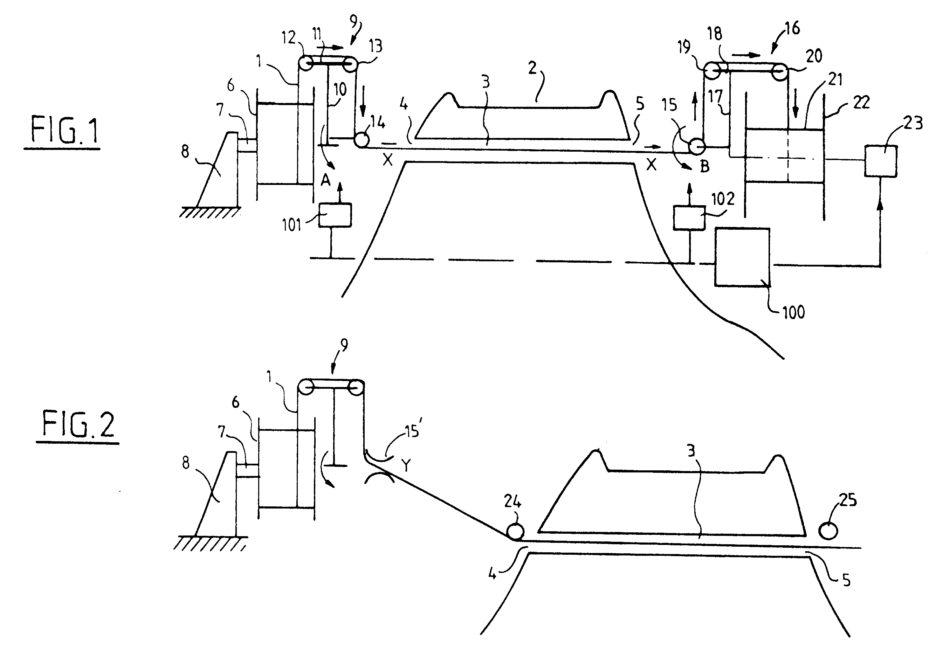

Le procédé selon la présente invention sera tout d'abord décrit dans ses caractéristiques les plus générales à l'aide de la figure 1.

Selon la figure 1, le procédé consiste à installer un câble 1 en traversant un obstacle 2 dans lequel a été réalisé un passage 3 avec une entrée 4 et une sortie 5. Cet obstacle est par exemple une chaussée qu'il faut traverser non par une tranchée qui détruit partiellement l'ouvrage, nécessite des travaux de remise en état et surtout gêne l'utilisation de la voie de circulation pendant un temps non négligeable mais de manière souterraine. Aussi, la traversée de l'obstacle 2 se fait-elle à travers un passage foré 3 ayant une entrée 4 et une sortie 5.

Le câble 1 de grande longueur est présenté enroulé sur un touret 6 (premier touret), porté de manière non rotative par l'axe 7 d'un support 8 lui-même embarqué sur un véhicule ou posé sur le sol.

Le dispositif comporte, au niveau du premier touret 6, un équipage de dévidage 9 formé d'un bras radial 10 portant un bras transversal 11 dont une extrémité est munie d'une poulie 12 et l'autre d'une poulie 13. Cet équipage comporte également un organe de renvoi tel qu'une poulie 14 située sensiblement dans l'axe XX du passage 3. Du côté de la sortie 5 le câble 1 est repris par un organe de renvoi tel qu'une poulie 15 appartenant à un équipage de rebobinage 16 formé d'un bras radial 17 portant une traverse 18 et dont les extrémités sont munies de poulies 19, 20. Le câble passe sur les organes de renvoi ou poulies 15, 19, 20 comme cela est indiqué par des flèches pour venir sur le fût 21 d'un second touret 22. Ce second touret 22 subit un couple de rebobinage exercé par un organe d'entraînement 23 (couple moteur ou frein) induisant dans le câble une certaine tension pour assurer son rebobinage correct.

Il est également à remarquer qu'il y a un mouvement de translation relative entre l'équipage de rebobinage 16 et le second touret 22 pour effectuer le trancanage du câble sur le second touret 22 ou touret de réception, le premier touret 6 étant le touret d'émission.

Selon l'invention, les équipages de dévidage 9 ou de rebobinage 16 tournent en synchronisme et dans le même sens (flèches A, B). Au cours de ce mouvement, l'organe 23 exerçant le couple d'enroulement permet au second touret 22 de compenser la différence de diamètre entre la nappe dévidée du premier touret 6 et la nappe rebobinée sur le second touret 21.

La synchronisation et le trancanage sont assurés par un circuit de commande 100 agissant sur les moteurs 101, 102 commandant les équipages 9, 16 et le moteur 23. La synchronisation se fait ainsi suivant un "axe électrique".

Les équipages 9 et 16 tout en tournant en synchronisme ne sont pas nécessairement calés en phase.

Selon la figure 1, on a supposé que le premier touret 6 était fixe en rotation. L'une des raisons rendant nécessaire cette hypothèse est que ce touret 6 peut avoir été placé à l'entrée 4 du passage 3 de l'obstacle 2 après que l'on ait dévidé et enfoui une certaine longueur de câble en aval du branchement à l'extrémité du câble. Dans ces conditions, le touret 6 est nécessairement bloqué en rotation et le dévidage ne peut se faire qu'à l'aide d'un équipage de dévidage 9 tournant autour du touret.

Selon l'hypothèse envisagée à la figure 1, la poulie ou organe de renvoi 14 est disposée de façon qu'en sortie, le câble soit aligné sur le passage 3, c'est-à-dire sur l'axe XX. Il en est de même du côté de sortie 5 pour la poulie de réception 15. Selon le montage de la figure 1, cela suppose implicitement que les équipages 9 et 16 tournent également autour de cet axe XX. Cela correspond au cas le plus simple de la mise en oeuvre du procédé de l'invention. Malheureusement, une telle situation n'existe que rarement en pratique car l'obstacle à traverser est souvent une route et l'on ne dispose pas de part et d'autre de la route d'un creux suffisant pour que l'axe des équipages 9 et 16 puisse être placé aussi bas que le passage 3. Usuellement, cet axe est situé plus haut comme cela est indiqué à la figure 2. Dans ce cas, l'organe de renvoi 14 est constitué par un ensemble de poulies ou de galets ou encore un organe de renvoi statique 15' en forme d'anneau de guidage traversé par le câble en sortie de l'organe de dévidage 9 et complété avantageusement par exemple par une poulie de guidage 24 à l'entrée 4 et une poulie de guidage 25 à la sortie 5 du passage 3. Les moyens de réception en sortie ne sont pas représentés. Ils comportent également un organe de guidage ayant la même fonction que l'organe 15' décrit ci-dessus du côté entrée.

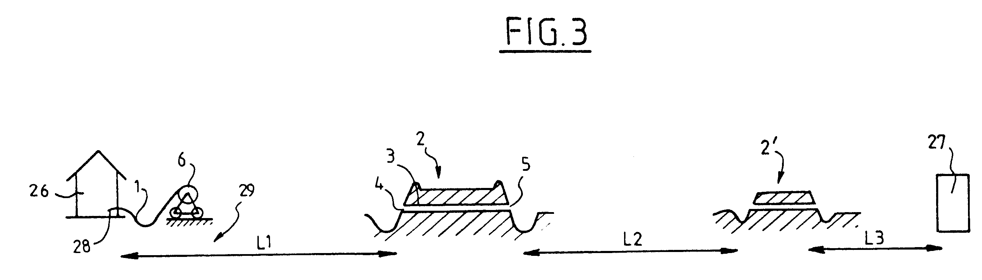

La figure 3 montre schématiquement un exemple de site dans lequel doit être installé un câble avec passage d'obstacles tels que des chaussées, en souterrain, sans réaliser de tranchée mais en passant dans un forage horizontal ou incliné.

Le câble peut être un câble électrique ou un câble de transmission au sens usuel du terme mais également un câble optique ou encore un tube recevant éventuellement un élément intérieur, par exemple une gaine servant à la mise en place d'un câble optique ou encore des barres et, de manière générale, l'invention concerne l'installation d'un élément de grande longueur enroulé sur un touret et qui nécessite le passage d'obstacles à travers un tube, forage ou autre et non pas une tranchée.

L'application envisagée ci-après sera celle d'un câble de transmission ou câble optique.

Selon l'exemple de site représenté à la figure 3, on se propose d'installer un câble 1 entre un premier point de branchement figuré par un immeuble 26 et un autre point de branchement 27 constitué par exemple par un poste de répartition ou de distribution.

Ce câble 1 est initialement enroulé sur un touret principal 6 lui-même porté par un véhicule représenté schématiquement. L'extrémité 28 du câble se branche au cours d'une première étape au premier point de branchement 26. Puis, en utilisant le touret 6 et son chariot, on place le câble 1 dans une tranchée 29, par exemple sur la longueur L1, jusqu'à ce que l'on rencontre l'obstacle 2 à traverser. Cet obstacle 2 est par exemple une voie de chemin de fer ou une route. Cet obstacle ne peut pas être traversé en tranchée aussi, le perce-t-on d'un passage foré 3, par exemple horizontal ou sensiblement horizontal, dans lequel il faut faire passer le câble entre le point d'entrée 4 et le point de sortie 5. Puis le schéma décrit ci-dessus recommence ; on enfouit le câble 1 dans une tranchée sur une longueur L2, jusqu'au prochain obstacle 2' qui doit être traversé de façon analogue à l'obstacle 2 et on rejoint le point de branchement après une nouvelle pose enfouie sur une longueur L₃.

De manière générale, actuellement, les méthodes d'installation à la déroulée sont : la pose en caniveaux et la pose en pleine terre par trancheuse ou par soc vibrant (le soc vibrant n'ouvre pas de tranchée).

Le procédé selon l'invention permet le passage du câble 1 à travers ces différents obstacles 2, 2' sans avoir à dévider le câble pour le lover en huit à l'entrée de chaque obstacle.

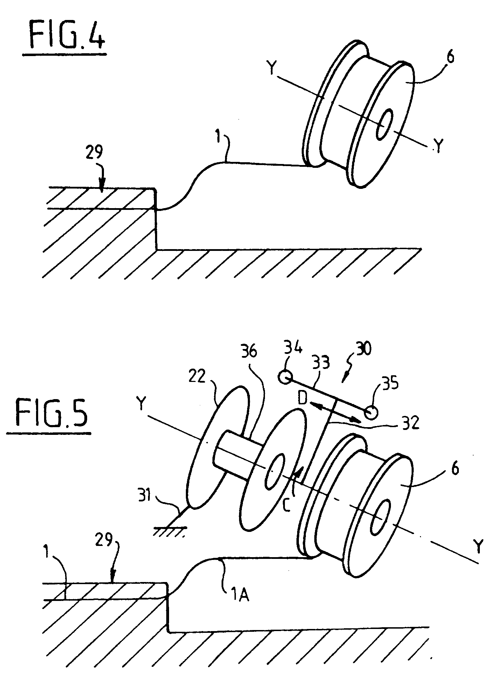

Selon le procédé de l'invention, la première étape ou point de départ est représentée à la figure 4 qui montre le premier touret ou touret principal 6 chargé du câble 1 à la sortie de la tranchée 29.

Dans cette situation il n'est pas possible d'avancer.

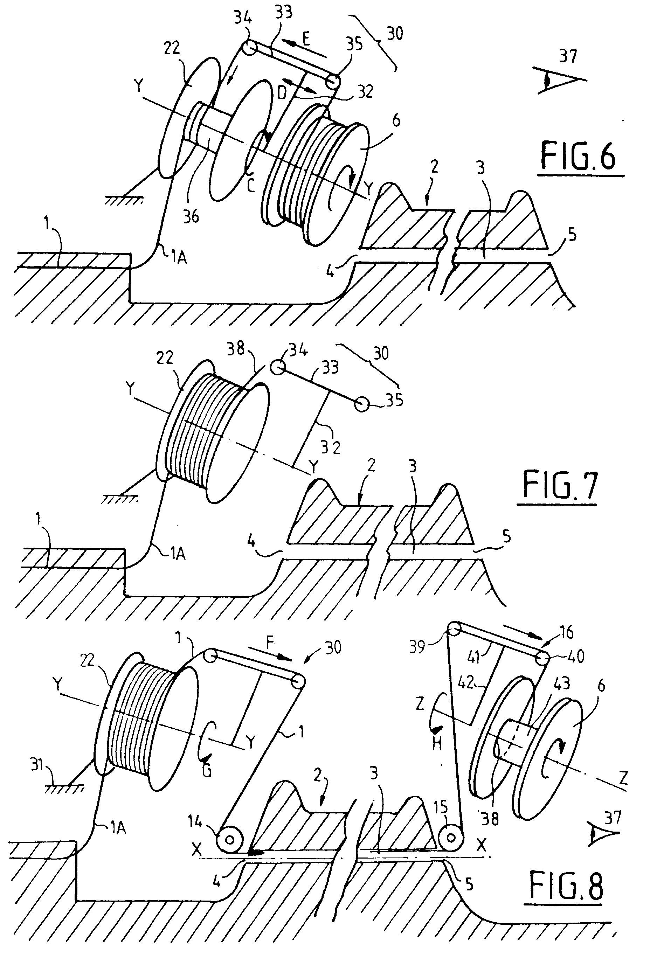

Selon la seconde étape (figure 5), on met en place un second touret ou touret auxiliaire 22, vide, et un équipage rotatif de transfert 30, l'ensemble étant de préférence placé aligné sur l'axe YY du touret principal 6.

On place le touret auxiliaire 22 sur un support de manière qu'il soit accessible sur toute sa périphérie mais on le bloque en rotation. Cela est schématisé par le lien 31. Par contre, l'équipage de transfert 30 et le touret principal 6 restent libres en rotation autour de l'axe YY.

L'équipage de transfert 30 se compose d'un bras radial 32 portant un bras transversal 33 muni à chacune de ses extrémités d'une poulie 34, 35. Cet équipage 30 peut tourner autour de l'axe YY.

Selon la figure 6, après la mise en place de cet équipage 30 et du touret 22, on fait passer une boucle 1A du câble autour du fût 36 du touret auxiliaire 22 ainsi que sur les poulies 34, 35 portées par le bras 33 de l'équipage de transfert 30 qui effectue non seulement un mouvement de rotation autour de l'axe YY selon la flèche C mais également un mouvement de translation selon la double flèche D et qui sert au trancanage du câble sur le touret auxiliaire 22. Le sens de circulation du câble pour l'enroulement est représenté par les flèches E.

Pendant ce mouvement, le touret principal 6 effectue un mouvement de rotation dans le sens de la flèche F en opposant un certain couple antagoniste pour assurer la tension du câble au moment de son transfert sur le touret auxiliaire 22.

Après la mise en place de la boucle 1A du câble 1 comme indiqué ci-dessus (cette boucle est en quelque sorte la partie du câble 1 comprise entre la sortie de la tranchée 29 et son enroulement sur le touret principal 6) comme le touret principal 6 peut tourner librement (sous la réserve du couple antagoniste évoqué ci-dessus) il est possible de tirer manuellement une boucle de câble 1A suffisante pour placer le câble sur le fût 36 du touret 22 et sur les poulies 34, 35 de l'équipage 30.

Puis, selon la figure 6, on fait tourner l'équipage de transfert 30 dans le sens de la flèche C, c'est-à-dire dans le sens des aiguilles d'une montre pour un observateur 37. Il convient de remarquer que le touret 22 reste fixe. Pendant ce mouvement de rotation de l'équipage 30, le câble 1 défile dans le sens de la flèche E et s'enroule sur le fût 36 du touret 22 tout en se dévidant du touret principal 6. Etant donné le sens d'enroulement sur le touret 22, celui-ci est en quelque sorte tiré en rotation dans le sens de la flèche C par l'équipage 30 et le couple antagoniste qu'il oppose sert à créer la tension d'enroulement.

Ce transfert se poursuit jusqu'à ce que le touret principal 6 soit vide. La seconde extrémité 38 du câble 1 apparaît alors sur le touret 22 et la partie 1A de la boucle reste dégagée en traversant les nappes des enroulements successifs sur le touret 22.

Le touret principal 6, vide, est alors enlevé de son emplacement (figure 7) pour être transporté de l'autre côté de l'obstacle 2 (côté de la sortie 5).

Selon la figure 8, tout en conservant le touret auxiliaire 22 bloqué en rotation (schématisé par la liaison 31), on dévide une longueur de câble 1 du touret 22, soit manuellement, soit avec l'équipage de dévidage 30 (le câble circulant maintenant en sens inverse (flèche F) et l'équipage 30 tournant également en sens inverse du mouvement de rotation précédent (flèche G) pour enfiler le câble dans le passage 3 en partant de l'entrée 4 jusqu'à la sortie 5. Puis on récupère le câble pour le mettre sur l'équipage de réception 16 de structure analogue à celle de l'équipage de transfert ou de dévidage, c'est-à-dire comportant deux poulies 39, 40 portées par une traverse 41 elle-même portée par un bras radial 42, le tout tournant autour de l'axe ZZ sur lequel est également monté le touret 6.

L'extrémité 38 du câble est fixée sur le fût 43 du touret 6 en passant par derrière selon la figure 8 (toujours pour l'observateur 37) (il est à remarquer que l'enroulement sur le touret 22 et sur le fût 43 du touret principal 6 se font suivant des rotations en sens inverse).

Après cette mise en place on fait tourner en synchronisme les équipages 30 et 16 dans le sens des flèches G, H (flèches de même sens de rotation) qui, pour l'observateur 37 est le sens contraire des aiguilles d'une montre autour des axes YY et ZZ. Le câble ainsi dévidé du touret 22, passe sur l'équipage 30 puis dans le passage 3 pour arriver sur l'équipage de réception 16 et sur le touret principal 6.

Il est à remarquer que le câble est guidé à l'entrée 4 du passage 3 (rectiligne) par la poulie d'entrée 14 et en sortie 5 par la poulie 15 de manière à être aligné dans l'axe du passage 3.

Bien que cela n'apparaisse pas à la figure 8, il est préférable dans un cas idéal que les axes YY et ZZ de rotation des équipages 30, 16 et du touret principal 6 soient alignés sur l'axe XX du passage 3 comme à la figure 1. Toutefois, cette situation idéale est difficile à réaliser en pratique car la place est souvent indisponible à l'entrée 4 et à la sortie 5 du passage 3 ; il est nécessaire de prévoir une déviation (figure 2) et pour cela il est prévu comme déjà indiqué, un guide 15' aligné sur l'axe YY de l'équipage rotatif 30. Un guide analogue est prévu après la poulie de sortie 15 du côté de sortie 5 du passage 3, sur l'axe ZZ de l'équipage de réception 16 (non représenté aux figures 2 et 8).

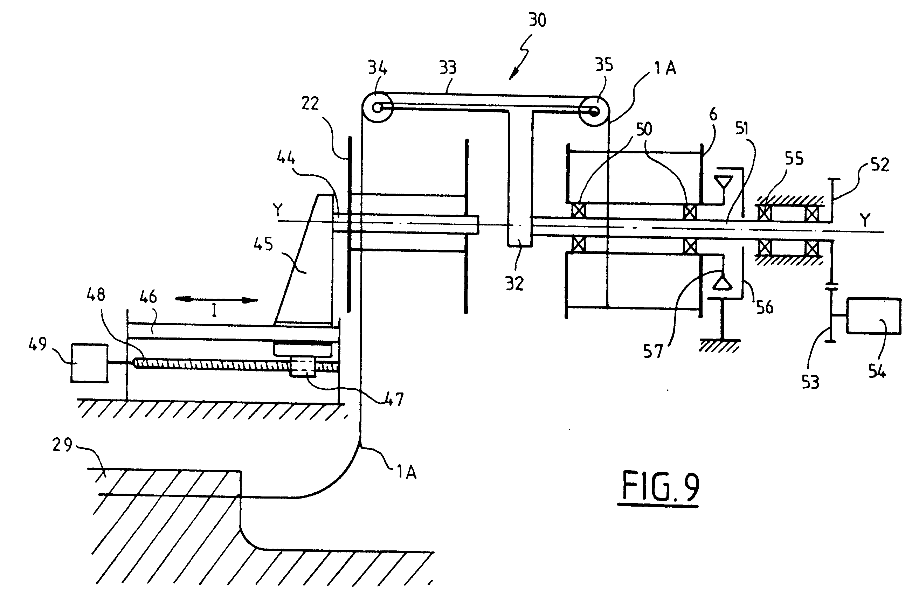

La figure 9 montre un mode de réalisation du montage représenté schématiquement à la figure 5. Selon ce mode de réalisation, le touret auxiliaire 22 est porté par un axe 44 solidaire d'une console 45 mobile en translation dans la direction de la double flèche I sur un rail 46, la console 45 ayant un taraudage 47 recevant une vis mère 48 entraînée en rotation commandée par un moteur 49 (de préférence un motoréducteur).

L'équipage de transfert 30 est mobile en rotation et statique en translation suivant l'axe de la double flèche I.

Le touret principal 6 est monté à rotation grâce à des paliers 50 sur l'axe 51 qui est lui-même rotatif et dont une extrémité porte la branche 32 de l'équipage de transfert 30. L'autre extrémité de l'axe 51 est munie d'une couronne d'entraînement 52 coopérant avec une couronne 53 portée par l'arbre de sortie d'un moteur 54 (ou motoréducteur).

Cet axe 51 est monté à rotation dans le palier 55. Le couple antagoniste ou couple de freinage est appliqué au touret principal 6 par l'intermédiaire, par exemple d'un frein électromagnétique constitué par une cage 56 fixe et une partie 57 coopérant avec la cage 56 et qui est solidaire en rotation du touret 6 ou de la partie rotative portant le touret 6 sur l'axe 51.

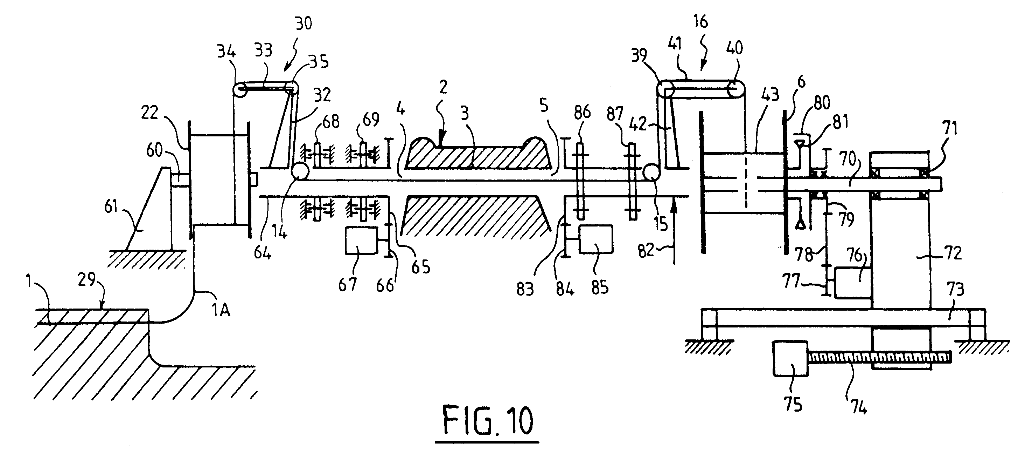

La figure 10 montre un mode de réalisation de l'ensemble du montage du touret auxiliaire 22, du touret principal 6, des équipages de dévidage ou de transfert et de réception 30, 16 pour une mise en oeuvre pratique du procédé de l'invention.

Ainsi, le touret auxiliaire 22 est porté par l'axe 60 solidaire d'une console 61, le touret 22 étant fixe. L'équipage de transfert 30, qui joue maintenant le rôle d'un équipage de dévidage, comporte des poulies 34, 35 reliées par un bras 33 lui-même solidaire d'un bras radial 32 relié à un tube 64 portant par ailleurs la poulie de renvoi 14 pour guider le câble dans l'axe du passage 3. Ce tube 64 porte une couronne d'entraînement 65 coopérant avec une roue d'entraînement 66 (par engrenage ou par courroie), cette dernière étant entraînée par un moteur ou motoréducteur 67. Le tube 64 est monté dans un palier constitué par deux ensembles de trois galets 68, 69 répartis chaque fois dans un même plan transversal à l'axe du tube 64. Il est à remarquer que pour permettre l'enlèvement de cet équipement à la fin du passage du câble, pour dégager le câble, le tube 64 et la roue d'entraînement 65 comportent une partie périphérique amovible. Certains des galets 68, 69 ou du moins le galet supérieur de chaque ensemble de trois galets 68, 69 est lui-même amovible ou escamotable pour permettre l'enlèvement de la partie amovible du tube 64 et par suite l'enlèvement de la boucle de câble.

Du côté de la sortie 5 du passage 3, le montage est relativement analogue. Le touret principal 6 est porté par un axe 70 monté dans un palier 71 d'un support 72 par ailleurs guidé sur une tige ou rail 73 et entraîné en translation par l'intermédiaire d'une vis-mère 74 entraînée par un moteur ou motoréducteur 75. Le support 72 porte un moteur 76 dont l'axe de sortie est muni d'une roue ou poulie 77 entraînant par une courroie 78 la roue ou poulie 79 coopérant par un frein électromagnétique composé d'une cage 80 et d'une partie complémentaire 81, cette dernière étant solidaire du touret principal 6.

Par ailleurs, l'équipage de réception 16 est constitué par les poulies 39, 40 portées par le bras 41 transversal lui-même porté par le bras radial 42 monté sur un tube 82 placé dans l'axe du passage 3. Ce tube 82 est analogue au tube 84. Il porte à son extrémité une roue d'entraînement 83 coopérant avec une roue 84 portée par l'axe de sortie d'un moteur 85 ou motoréducteur. Le tube 82 est également monté dans deux ensembles de trois galets 86, 87 répartis régulièrement chaque fois dans un plan transversal. Enfin, le tube 82 porte la poulie de renvoi 15.

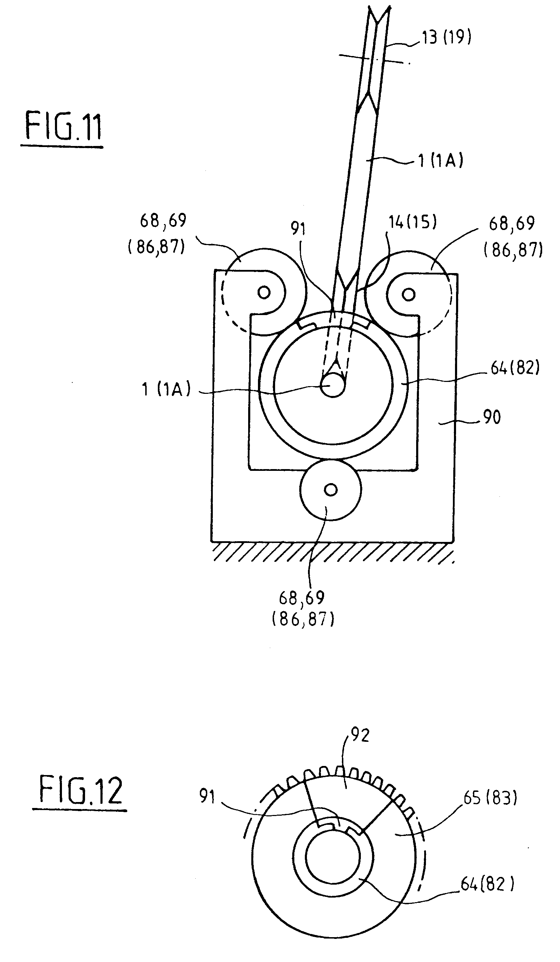

La figure 11 montre schématiquement et en vue d'axe la structure du palier du tube 64 à l'entrée 4 du passage 3 et du tube 82 à la sortie 5 de ce même passage. Dans cette figure, les références correspondant à la partie en amont du passage 3 sont représentées sans parenthèses alors que les références de la partie en aval du passage 3 sont représentées entre parenthèses.

Cette figure 11 montre le tube 64, (82) placé dans les galets 68, 69, (86, 87) des deux paires respectives de trois galets disposés en triangle. Chaque groupe de galets est porté par un bâti 90 en forme de lyre. Cette vue en coupe montre que le tube 64, (82) est muni d'une partie amovible 91 pour l'extraction du câble 1 (1A).

La figure 12 est une vue analogue à celle de la figure 11 montrant les roues dentées 65, 83 portées par l'extrémité du tube 64, 82. Ces roues dentées sont également munies d'un segment amovible 93. (Ce segment 92 est porté par la partie amovible 91 du tube 64, 82).

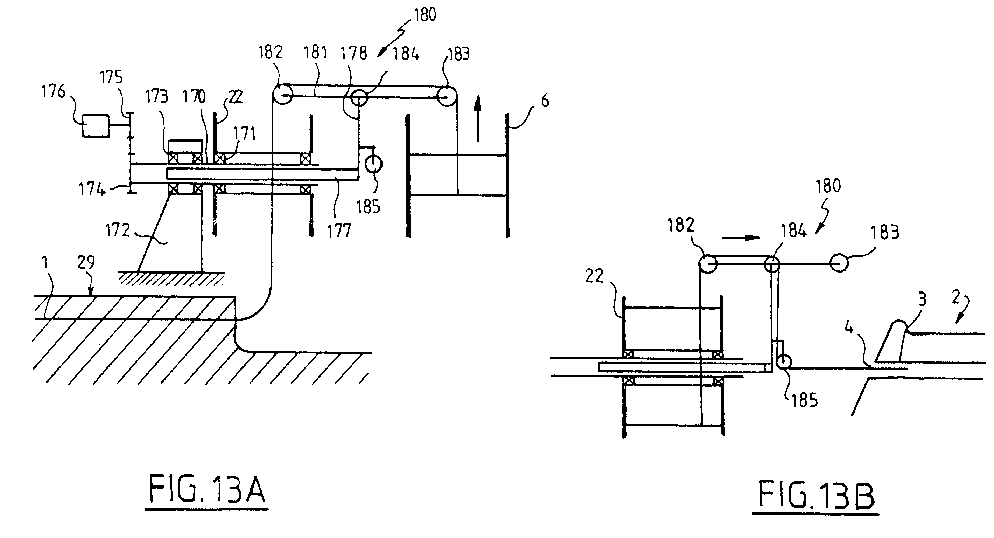

La figure 13A montre une variante de réalisation du montage de la figure 9. Selon cette variante, le touret auxiliaire 22 est porté par un manchon 170 par l'intermédiaire d'un palier à billes 171. Ce manchon 170 est lui-même monté à rotation dans la console 172 par l'intermédiaire d'un palier 173. Ce manchon 170 porte à son extrémité gauche une roue 174 coopérant avec la roue 175 de sortie d'un moteur d'entraînement 176. Le manchon 170 est ainsi entraîné en rotation. Intérieurement, ce manchon est cannelé et reçoit un arbre cannelé 177 sortant du manchon par le côté droit et portant à son extrémité le bras radial 178 de l'équipage de transfert 180. Ce bras 178 est muni d'un bras transversal 181 portant à chaque extrémité une poulie 182, 183. Il est également muni d'une poulie intermédiaire 184 et d'une poulie complémentaire 185 située au niveau de l'axe.

Le mouvement de trancanage se fait par déplacement télescopique de l'arbre cannelé 177 dans le manchon 170 tout en étant entraîné en rotation.

Le mouvement de transfert ou transvidage partant du touret principal 6 vers le touret auxiliaire 22 se fait comme cela a déjà état décrit.

Cet ensemble permet également l'émission du câble par une simple transformation (figure 13B). Pour cela, on enlève le touret principal 6 et on fait passer le câble sur la poulie 182, la poulie intermédiaire 184 et la poulie complémentaire 185 pour l'introduire par l'entrée 4 et le présenter dans l'alignement de l'axe du passage 3.

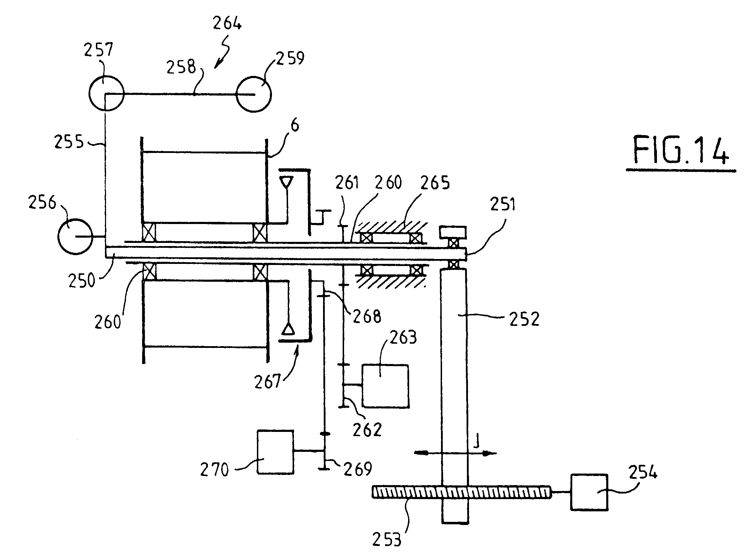

La figure 14 présente une variante de l'ensemble de réception par rapport à l'ensemble de réception de la figure 10.

Selon la variante de la figure 14, l'équipage de réception n'est pas monté sur un tube mais sur un arbre cannelé 250 dont une extrémité 251 est logée dans un palier solidaire d'un bras 252 commandé en translation suivant la double flèche J par une vis mère 253 entraînée par un moteur 254. Cet arbre cannelé 251 qui effectue ainsi un mouvement axial, porte à son autre extrémité un bras radial 255 portant les poulies 256 et 257 ainsi qu'un bras transversal 258 portant la poulie 259.

Cet arbre cannelé 251 traverse un cylindre cannelé 260 portant une poulie 261 reliée à la poulie 262 d'un moteur 263 assurant la rotation de ce cylindre cannelé 260 et par suite la rotation de l'arbre cannelé 251 et ainsi celle de l'équipage de réception 264. Le cylindre cannelé 260 est porté dans un palier 265. Le cylindre 260 porte également le touret principal 6 par l'intermédiaire d'un palier 266. Ce touret principal 6 est muni d'un entraînement en rotation assuré par un dispositif de couplage électromagnétique 267 muni d'une poulie 268 reliée à la poulie 269 d'un moteur 270. Cela permet d'appliquer le couple d'enroulement au touret principal 6.

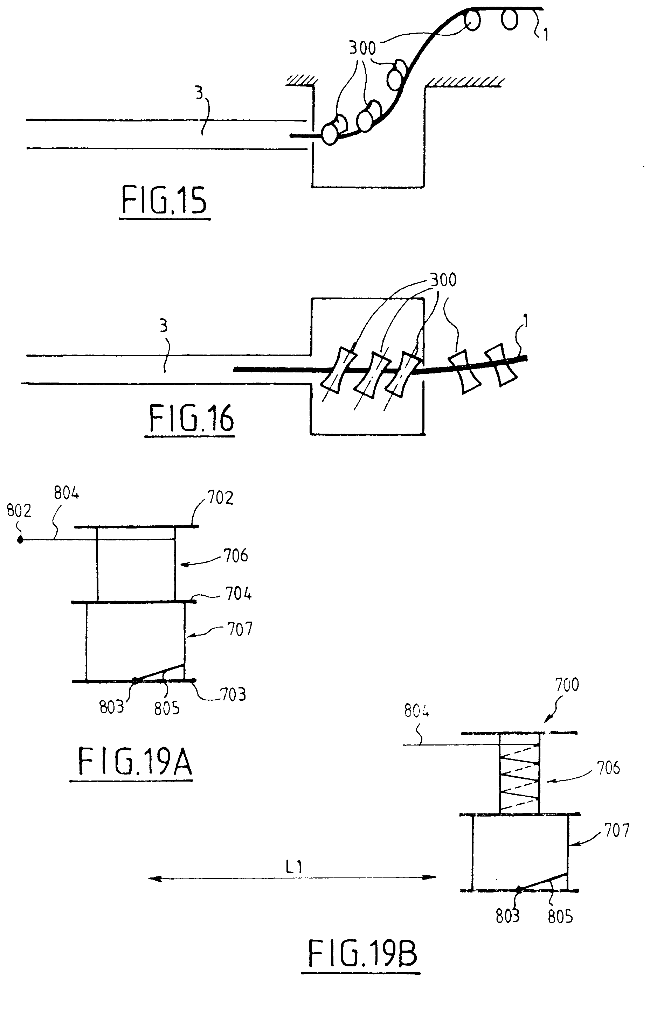

Les figures 15 et 16 montrent le guidage du câble 1 suivant un chemin courbe. La figure 15 montre ce guidage en vue de côté, par exemple à la sortie du passage 9 par des galets 300 en forme de diabolos disposés avec un axe non perpendiculaire au chemin que doit suivre le câble 1. Cela apparaît mieux à la vue de dessus selon la figure 16.

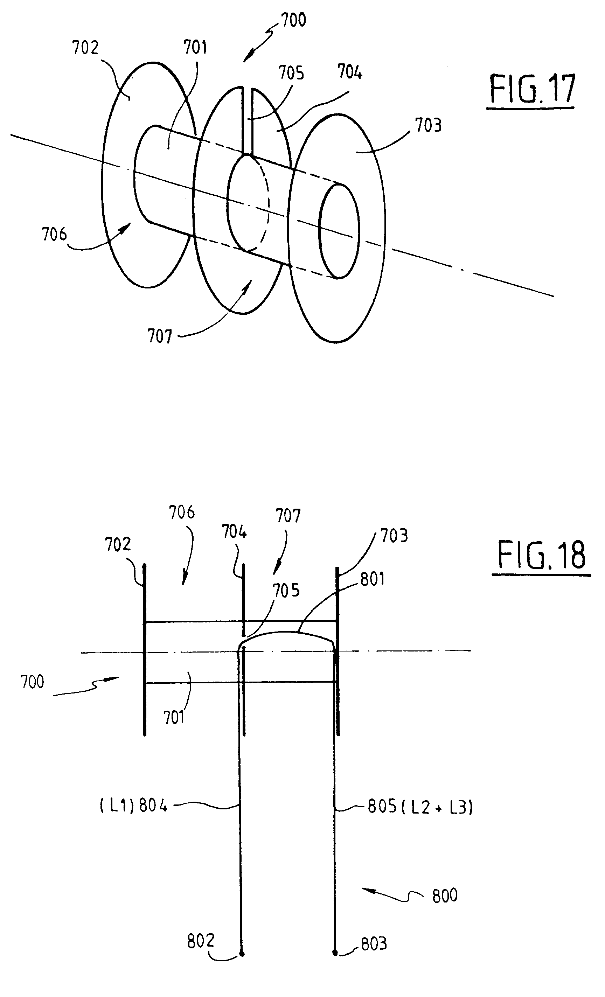

Un second mode de réalisation du procédé de l'invention sera décrit ci-après à l'aide des figures 17 à 19B.

Dans la description générale du procédé selon la figure 1 le touret principal 6 est un touret quelconque, qui porte une certaine longueur de câble et est non rotatif pour des raisons liées aux étapes antérieures du procédé. A titre d'exemple, le touret principal 6 est le touret portant le reste de câble à la fin de l'enfouissage d'une longueur de câble dans une tranchée. Pour l'opération de passage à travers l'obstacle il faut alors procéder à un transfert du reste de câble du touret principal 6 sur le touret auxiliaire 22 avant de passer le câble à travers l'obstacle.

Une variante du procédé de l'invention, qui sera décrite ci-après à l'aide des figures 17 à 19 dans ses caractéristiques générales et à l'aide de la figure 20 pour une variante de réalisation, permet d'éviter ce transfert préalable par l'utilisation d'un touret cloisonné.

La figure 17 montre en perspective un tel touret cloisonné 700 comprenant un fût 701 s'étendant sur toute la largeur du touret et qui est bordé par deux joues ou flasques 702, 703 et porte une joue intermédiaire ou cloison 704 munie d'une fente 705. Les joues 702, 705 et 705, 703 définissent respectivement ainsi un premier compartiment 706 et un second compartiment 707.

Ces compartiments peuvent être de même capacité ou de capacités différentes suivant les applications du procédé.

Selon l'invention, le touret cloisonné 700 est chargé préalablement du câble réparti entre les deux compartiments 706, 707 en fonction de l'installation de câble à effectuer.

On supposera ci-après que le premier compartiment 706 reçoit la partie de câble destinée à être enfouie dans une tranchée et le second compartiment 707, la partie de câble qui doit traverser l'obstacle.

La position de l'obstacle 2 étant connue par rapport au point de départ 26 (figure 3), cette première longueur de câble est la longueur L₁, et la longueur de câble nécessaire au passage de l'obstacle jusque par exemple à la jonction avec le point de branchement 27 est égale à L₂ + L₃. On détermine le point 801 du câble 800 qui se trouve à la longueur L₁ de sa première extrémité 802, l'autre brin du câble reliant le point 801 à la seconde extrémité 803 du câble correspondant à la longueur L₂ + L₃. Le premier brin portera la référence 804 et le second brin la référence 805.

Puis on enroule par exemple en atelier sur le touret 700, simultanément les deux brins 804, 805 respectivement dans le premier compartiment 706 et dans le second compartiment 707. Le touret cloisonné 700 est alors prêt pour la pose du câble. Ce touret est représenté à la figure 19A.

Sans toucher au second compartiment 707, on pose le brin 804 du câble sur la longueur L₁ en l'enfouissant par exemple dans une tranchée ou en le tirant à travers une gaine jusqu'au point de branchement 26 (selon la figure 3). A la fin de cette mise en place le premier compartiment 706 du touret 700 sera vide (à l'exception d'une réserve de travail correspondant par exemple à une couche de spires) et le second compartiment 707 sera toujours intact. Le compartiment 707 du touret 700 peut alors s'utiliser comme touret principal 6 pour la mise en oeuvre du procédé de la figure 1.

Toutefois, à la sortie de l'obstacle, on se trouvera dans la situation d'un touret non cloisonné.

Si pour des raisons de mise en place il est souhaitable de traiter la suite de la pose du câble en aval de l'obstacle 2 à la manière d'un touret cloisonné, c'est-à-dire d'un touret à deux compartiments dont l'un porte une longueur déterminée, par exemple à enfouir à la suite de l'obstacle 2 dans une tranchée, puis une troisième longueur L₃ (figure 3) destinée à être posée en aval d'un nouvel obstacle 2', il est souhaitable de rebobiner le câble en aval de l'obstacle 2 non pas sur un touret simple mais sur un touret cloisonné. La figure 20 montre la mise en oeuvre de cette variante du présent procédé.

Selon cette variante (figure 20), en aval de la sortie 5 du passage 3 de l'obstacle 2, il est prévu un ensemble formé par un support recevant un touret intermédiaire 900 muni d'un moyen 901 permettant d'appliquer au touret 900 un couple d'enroulement. Ce moyen est par exemple un frein électromagnétique dont une partie est reliée au touret 900 et l'autre partie est reliée à une poulie 902 elle-même reliée à une poulie 903 d'un moteur 904, la liaison se faisant par exemple par une courroie 905.

Ce touret intermédiaire 900 coopère avec un équipage 906 formé d'un bras radial 907 et d'un bras transversal 908 portant une poulie 909 pour le passage du câble 910 (ce câble 910 est le brin 805 selon la figure 18).

L'équipage 906 comporte également une seconde poulie 911 servant au cours de la deuxième phase de cette variante du procédé.

Enfin, directement en aval de la sortie 5, il est prévu un second équipage 912 composé d'un bras 913 radial et d'un bras transversal 914, ce dernier portant à chaque extrémité une poulie 915, 916 et au niveau de l'axe de rotation l'équipage 912 est muni d'une poulie 917. Le bras radial 913 est porté par un manchon 918 monté dans un palier 919 analogue au palier représenté aux figures 11 et 12 et non décrit en détail ici.

Ce second équipage 912 est destiné à coopérer avec le premier équipage 906 à la fois pour la première phase de rebobinage pour charger le touret intermédiaire 900 puis pour la seconde phase de rebobinage pour charger le touret cloisonné 920, ce touret cloisonné comporte comme précédemment une cloison 921 définissant avec les parois d'extrémité 922, 923 un premier compartiment 924 et un second compartiment 925.

Cette variante de procédé se met en oeuvre comme suit :
Au début des opérations de passage du câble 910, le câble sortant du passage 3 traverse le manchon 918 pour passer sur les poulies 917, 915, 909 et arriver sur le fût du touret intermédiaire 900. Le rebobinage du câble 910 sur le touret intermédiaire 900 s'effectue comme cela a déjà été décrit précédemment, par rotation simultanée de l'équipage dévidant le brin 805 du touret cloisonné 700 (figure 18) jusqu'à ce qu'il ne reste dans le compartiment 707 que la longueur de câble L₂. Comme la longueur totale de câble dans le compartiment 707 était L₂ + L₃, il y aura donc une longueur de câble L₃ sur le touret intermédiaire 900. A ce moment on prend une boucle 926 du câble 900 et on fait passer cette boucle entre les poulies 911 du premier équipage 900 et 916 du second équipage 912 et on accroche cette boucle 926 dans la fente non référencée de la cloison 929. A l'aide des deux équipages 906, 912 et de l'équipage non représenté dévidant le brin 805 du compartiment 707 du touret 700 (figure 8), ces équipages tournant en synchronisme, on rebobine dans le premier compartiment 924 la longueur L₂ de câble qui restait dans le compartiment 707 du touret 700 et on dévide du touret intermédiaire 900 la longueur de câble L₃ qu'il avait reçue pour rebobiner cette longueur de câble dans le compartiment 925 du touret 920.

Il est à remarquer que ce double rebobinage pourrait se faire indépendamment et consister à rebobiner (l'ordre est important) la longueur de câble L₃ du touret intermédiaire 900 dans le compartiment 925 (le touret 920 étant bloqué en rotation) à l'aide de l'équipage 906 et la reprise de la longueur restante L₂ du compartiment 707 dans le compartiment 924 (le touret étant freiné en rotation par le dispositif non représenté évoqué plus haut) à l'aide de l'équipage 912. D'ailleurs, lorsque ces deux opérations se font simultanément il n'est pas nécessaire que les équipages 906 et 912 tournent en synchronisme. Le seul synchronisme nécessaire est celui de la rotation de l'équipage 912 et de l'équipage non représenté dévidant le câble du compartiment 707 du touret 700.

## Revendications

1. Procédé d'installation d'un câble avec traversée d'obstacles à partir d'un câble de grande longueur enroulé sur un premier touret placé en amont de l'obstacle, caractérisé en ce que :
- on dévide le câble (1) du premier touret (6) non rotatif par dévidage, en tournant autour du touret,
- on conduit le câble (2) à travers l'obstacle (2, 3)
- on reprend le câble (1) en sortie d'obstacle en rebobinant en tournant autour d'un second touret (22),
- on tourne simultanément, en synchronisme, pour le dévidage et le rebobinage pour dévider le câble du premier touret (6) et le rebobiner sur le deuxième touret (22), et
- on exerce, sur le second touret, un couple de rebobinage induisant une certaine tension dans le câble pendant le rebobinage.

2. Procédé selon la revendication 1, caractérisé en ce que :
- on installe le câble à partir d'un point de raccordement par déroulage du touret jusqu'à l'obstacle à traverser.
- on met en place un touret auxiliaire (22) vide
- on bloque en rotation le touret auxiliaire (22)
- on laisse le touret principal (6) libre en rotation
- on place une boucle (1A) du câble prise en amont du touret principal (6) sur le touret auxiliaire (22)
- on tourne autour du touret principal (6) pour dévider le câble du touret principal et le faire passer sur le touret auxiliaire (22) qui reste fixe tout en appliquant une rotation compensatoire au touret principal.

3. Procédé selon l'une quelconque des revendications 1 et 2, caractérisé en ce qu'on enroule le câble sur le touret auxiliaire ou sur le touret principal avec un mouvement de trancanage.

4. Procédé selon la revendication 1, caractérisé en ce que :
- on enroule sur un touret cloisonné (700) à deux compartiments (706, 707), le câble (800) avec une boucle (801) passant par une fente (705) ouverte dans la cloison (704) du touret, le premier compartiment (706) recevant une longueur de câble (L₁) égale à la longueur pratique de câble à installer à la déroulée en amont de l'obstacle (2) à traverser jusqu'au point de branchement amont (26) et dans le second compartiment (707) on enroule une longueur (L₂ + L₃) égale à celle nécessaire en aval de l'obstacle (2), y compris la longueur de passage à travers l'obstacle (2),
- on dévide et on installe le câble entre le point de branchement (26) et l'obstacle (2) en utilisant la longueur de câble (L₁) du premier compartiment (706),
- on dévide le câble du second compartiment (707) et on le rebobine à la sortie de l'obstacle (2) sur un second touret (900, 920) en le dévidant du côté amont de l'obstacle et en le rebobinant du côté aval, simultanément et en synchronisme.

5. Procédé selon la revendication 4, caractérisé en ce que le second touret est constitué d'un ensemble formé d'un touret intermédiaire (900) et d'un touret cloisonné auxiliaire (920) et :
- on rebobine d'abord sur le touret intermédiaire (900), le câble jusqu'à ce qu'il ne reste sur le deuxième compartiment du touret cloisonné, principal, en amont de l'obstacle (2), qu'une longueur (L₂) égale à celle que doit recevoir le premier compartiment (924) du touret cloisonné auxiliaire (920),
- puis on place la boucle de câble (926) prise entre le touret intermédiaire (900) et la sortie (5) de l'obstacle (2) dans la lente de la cloison (921) du touret auxiliaire (920) et on rebobine dans les deux compartiments (924, 925) du touret auxiliaire (920) en chargeant le premier compartiment (924) à partir du reste de câble (L₂) du touret principal et le deuxième compartiment (925) du touret auxiliaire (920) à partir du câble (L₃) enroulé sur le touret intermédiaire (900).

6. Procédé selon la revendication 5, caractérisé en ce qu'on exerce un couple d'enroulement sur le touret intermédiaire (900) d'abord pour rebobiner sur ce touret du câble provenant du touret principal puis pour dévider ce touret intermédiaire vers le touret auxiliaire (920).

7. Dispositif pour la mise en oeuvre du procédé selon la revendication 1, caractérisé en ce qu'il comprend :
- un touret principal (premier touret) (6),
- un moyen de support du touret principal (6) de manière non rotative (7, 8),
- un touret auxiliaire (deuxième touret) (22)
- un moyen de montage en rotation du touret auxiliaire (22)
- un équipage de dévidage (9) associé au touret principal (6),
- un équipage de rebobinage (16) associé au touret auxiliaire (22)
- un moyen d'entraînement synchrone (100) des deux équipages (9, 16) pour le dévidage et le rebobinage simultané des tourets respectifs (6, 22).
- un moyen (23) appliquant un couple d'enroulement au touret auxiliaire (22) pour tendre le câble au rebobinage.
- un moyen de commande (100) relié au moyen d'entraînement (101) du premier équipage (9) et au moyen d'entraînement (102) du second équipage (16).

8. Dispositif selon la revendication 7, caractérisé en ce que le moyen d'entraînement synchrone (100) est un axe électrique.

9. Dispositif selon la revendication 7, caractérisé en ce que l'équipage de rebobinage (16) comporte un moyen de trancanage.

10. Dispositif selon la revendication 7, caractérisé en ce que les équipages (9, 16) comportent un moyen de guidage (14, 15, 15') pour recevoir le câble suivant l'axe de rotation de chaque équipage et guider le câble (1) à la sortie et à l'entrée respective de l'équipage.

11. Dispositif selon la revendication 7, pour la mise en oeuvre du procédé selon les revendications 1 et 2, caractérisé en ce qu'il comprend :
- un touret auxiliaire (22) et un équipage de transfert (30) communs aux tourets principal (6) et auxiliaire (22), juxtaposés sur le même axe (YY),
- un moyen de blocage en rotation (31) du touret auxiliaire (22), le touret principal (6) étant rotatif
- l'équipage auxiliaire tournant autour des deux tourets (6, 22) pour transférer le câble (1) du touret principal (6) au touret auxiliaire (22).

12. Dispositif selon la revendication 11, caractérisé en ce que le touret auxiliaire (22) est porté par un axe (44) solidaire d'une console (45) mobile en translation de trancanage (46, 47, 48, 49) commandé et le touret principal (6) est monté à rotation sur un axe (51) aligné sur le touret auxiliaire (22), cet axe portant l'équipage de transfert (30) et est relié à un moyen d'entraînement en rotation (52, 53, 54), un moyen (56, 57) coopérant avec le touret principal (6) pour exercer un couple d'enroulement.

13. Dispositif selon l'une quelconque des revendications 7 et 12, caractérisé en ce que l'équipage de transfert (30) pour le touret auxiliaire (22) est monté sur un tube (64) aligné sur l'axe de rotation de l'équipage (30) et destiné à être traversé par le câble en sortie d'équipage (30), ce tube étant monté dans un palier à galets (68, 69) et est relié à un moyen d'entraînement en rotation (65, 66, 67), ce tube comportant une partie amovible pour permettre l'extraction du câble sans le sectionner.

14. Dispositif selon la revendication 7, caractérisé en ce que l'équipage de rebobinage (16) associé au touret principal (6) en sortie d'obstacles (2) est monté solidairement en rotation sur un manchon (82) entraîné en rotation par un moyen d'entraînement (83, 84, 85) et monté dans un palier à galets (86, 87), ce manchon (82) étant traversé par le câble en amont de l'équipage (16) proprement dit et ce manchon comporte une partie périphérique amovible pour permettre l'extraction du câble en fin de rebobinage, le touret principal (6) étant monté sur un axe (68) monté libre en rotation dans un support (70) coopérant avec des moyens de translation (71, 72, 73), ce support (70) comportant un moyen d'entraînement en rotation (74, 75, 76, 77) relié au touret (6) par l'intermédiaire d'un frein électromagnétique (78, 79).

15. Dispositif selon l'une quelconque des revendications 7, 13, 14, caractérisé en ce que les tube et manchon (84, 82) comportent des parties amovibles (91, 92).

16. Dispositif selon l'une quelconque des revendications 7, 11, caractérisé en ce que l'équipage de transfert (180) est porté par un arbre cannelé (177) logé dans un manchon cannelé (170) lui-même entraîné en rotation par un moyen d'entraînement (174, 175, 176), ce manchon traversant librement en rotation une console fixe (172) et recevant extérieurement, de manière libre en rotation, le touret auxiliaire (22), l'arbre cannelé (177) étant commandé en translation axiale pour effectuer un mouvement de trancanage, et l'équipage de transfert (180) comporte un bras radial (178) portant près de l'axe une poulie (185) et à son extrémité une poulie (184) ainsi qu'un bras transversal (180) muni à ses extrémités d'une poulie (182, 183), cet équipage (180) assurant avec ces poulies (182, 183) le transfert du câble du touret principal (6) au touret auxiliaire (22) et par ces poulies (182, 184, 185) le dévidage du câble à partir du touret auxiliaire (22).

17. Dispositif selon l'une quelconque des revendications 7 et 14, caractérisé en ce que l'équipage de réception (264) se compose d'un bras radial (255) portant une poulie (256) près de l'axe et une poulie d'extrémité (257) ainsi qu'un bras transversal (258) portant une poulie (259), cet équipage étant fixé à un arbre cannelé (250) relié à un bras (252) commandé en translation parallèlement à l'axe de l'arbre (250) pour commander l'équipage (264) en mouvement de trancanage, ainsi qu'un cylindre cannelé (260) recevant l'arbre cannelé (250), ce cylindre portant une poulie (261) coopérant avec un moyen d'entraînement en rotation (262, 263), et le touret principal (6) est monté libre en rotation sur le cylindre cannelé (260) en étant relié à un dispositif de couplage électromagnétique dont une partie est solidaire du touret principal (6) et l'autre est reliée à un moyen d'entraînement en rotation (268, 269, 270) pour induire dans le touret (6) un couple d'enroulement.

18. Dispositif selon la figure 7 pour la mise en oeuvre du procédé selon les revendications 1, 4 et 5, caractérisé en ce que l'ensemble de réception en sortie d'obstacles (2) pour transférer le câble sur un touret cloisonné auxiliaire (920) se compose d'un touret intermédiaire (900) et d'un touret auxiliaire (920), cloisonné à deux compartiments (924, 925) placé entre le touret intermédiaire (900) et la sortie (5) du passage (3) de l'obstacle (2), ainsi qu'un équipage (906) de transfert entre le touret intermédiaire (900) et le second compartiment (925) du touret cloisonné auxiliaire (920) ainsi qu'un équipage de réception (912) placé à la sortie (5) de l'obstacle (2) en amont du touret cloisonné auxiliaire (920), l'équipage (906) se composant d'un bras radial (907) et d'un bras transversal (908), ce dernier portant deux poulies (909, 911) pour rebobiner le câble (910) sur le touret intermédiaire (900) soit pour transférer le câble du touret intermédiaire (900) vers le second compartiment (925) du touret cloisonné auxiliaire (920) et l'équipage de rebobinage (912) comporte un galet de réception (917) en sortie de passage et un galet de renvoi (915) pour soit coopérer en synchronisme et en phase avec l'équipage (906) pour guider le câble d'abord sur le touret intermédiaire (900), soit pour rebobiner du câble directement du touret placé en amont de l'obstacle (2), dans le premier compartiment (924) du touret cloisonné auxiliaire (920).
